# EUROPEAN PATENT SPECIFICATION

(11) **EP 1 123 647 B1**
(45) Date of publication and mention of the grant of the patent: **18.08.2004**
(21) Application number: 00118833.3
(22) Date of filing: 31.08.2000
(51) Int. Cl.: A01B 51/02

(54) **Agricultural tractor with a lateral driving position**
Landwirtschaftlicher Schlepper mit seitlicher Fahrerposition
Tracteur agricole à position de conduite latérale

(30) Priority: 09.02.2000 IT TO200026 U
(43) Date of publication of application: 16.08.2001
(73) Proprietor: Merlo Project S.r.l., I-12020 S. Defendente di Cervasca (Cuneo) (IT)
(72) Inventor: Merlo, Amilcare, c/o Merlo Spa Ind. Metalmeccanica, 12020 Franzione S'Defendente di Cervasca (IT); Galfre' Renato, c/o Merlo Spa Ind. Metalmeccanica, 12020 Franzione S'Defendente di Cervasca (IT)
(74) Representative: Marchitelli, Mauro

(56) References cited:
- EP-A- 0 945 395
- WO-A-96/15656
- DE-A- 3 409 515
- DE-C- 964 907
- DE-U- 9 309 304
- US-A- 3 720 047

## Description

This invention relates to an agricultural tractor with a front section and a rear section, a driving position which driving seat is normally facing the front section and an attachment unit for farming tools arranged in said rear section in a position which is substantially central with respect to a longitudinal axis of the tractor (see eg. EP-A-945395).

Tractors of the conventional type have a driving position which is arranged centrally with respect to the longitudinal axis of the machine. In tractors of this kind, the operator sitting in the driving seat must usually turn by approximately 180° to see the working area of the tool carried by the rear attachment unit. The working conditions in which the operator drives the agricultural tractor forwards and monitors the working area of the rear tool at the same time are very uncomfortable and dangerous.

In order to overcome the aforesaid problem, this invention relates to an agricultural tractor which characteristics are illustrated in the main claim.

Further preferred embodiments of the tractor according to the invention are the subject of dependent claims.

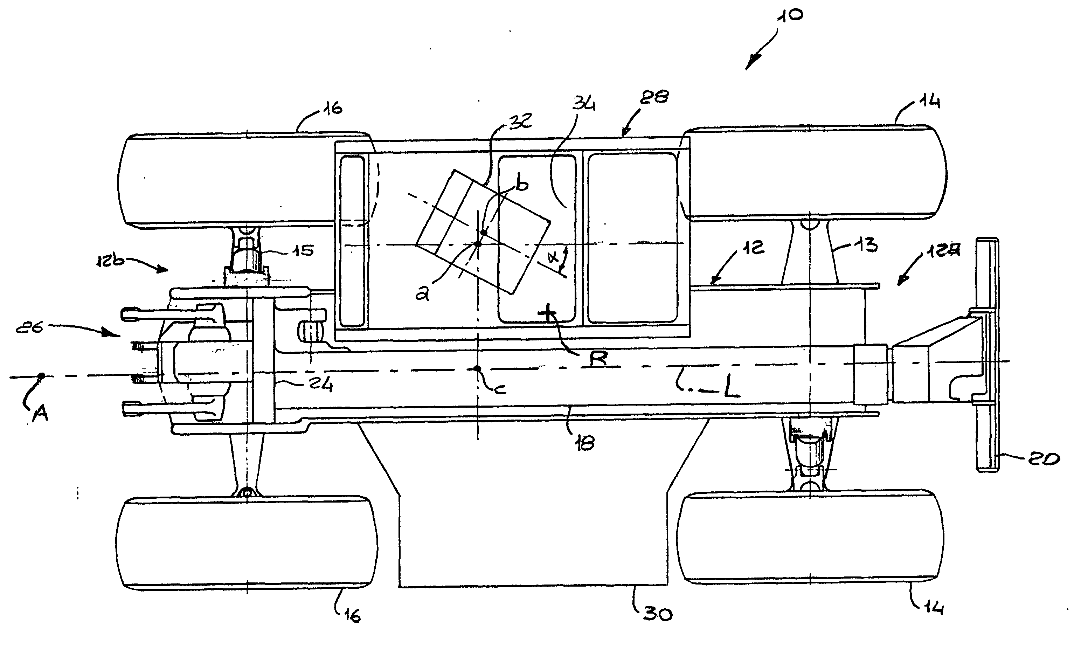

The present invention will be disclosed in detail with reference to the accompanying figure, given as non-limiting example, illustrating a plan view of an agricultural tractor according to this invention.

With reference to the accompanying figure, 10 schematically indicates an agricultural tractor comprising a chassis 12 with a front section 12a and a rear section 12b. The tractor 10 comprises a front axle 13 fitting a pair of front wheels 14 and a rear axle 15 fitting a pair of rear wheels 16. The tractor 10 is equipped with a lifting arm 18, which is preferably telescopic, jointed to the chassis 12 in the rear section 12b around a transverse axis 24. In lowered configuration, the lifting arm 18 extends in parallel to a median longitudinal axis L and projects over the front end of the chassis 12. The lifting arm 18 carries an attachment 20 on the end where to connect various types of tools, such as - for example - a fork, a bucket, an overhead platform, etc.

An attachment unit 26 which is destined to be connected to a farming tool is fitted on the rear section 12b of the chassis 12. The attachment unit 26 preferably comprises a three point hitch associated to a lifting device. The hitch unit 26 is not described in greater detail herein since the unit is conventionally used in the agricultural machine sector for connecting farming tools. The working centre of a tool (not shown) connected to the rear hitch 26 is schematically indicated by the letter A in the drawing.

The tractor 10 comprises a driving position 18 which is arranged laterally with respect to the longitudinal axis L. An engine of the known type which is generally indicated with the number 30 is arranged on the opposite side with respect to the driving position 18.

A driving seat 32 normally facing the front section is arranged in the driving position 28. The driving seat faces a control panel 34 comprising the instruments and the operative controls of the tractor (hydraulic distribution system, steering wheel, etc.) and can be swivelled around a vertical axis R which is preferably arranged outside the seat 32. The seat 32 can be turned around the axis R towards the rear section 12b. The lateral position of the driving seat 28 makes the working centre A of the rear tool easily visible with minimum torsion by means of a small rotation of the seat 32 around the vertical axis R. In the drawing, a indicates the centre of vision of an operator when the seat is not swivelled and b indicates the centre of vision of an operator with the seat turned by an angle α. According to this invention, the maximum slant angle of the seat 32 around the axis R is 20°. This small angle of oscillation of the seat 32 allows the operator to easily see the rear tool in working conditions and at the same time ensures prompt access to the control devices arranged on the control panel 34. Given the same geometry of the machine, respect to the case in which the seat 32 cannot swivel, the solution implementing a swivelling seat allows to reduce the torsion angle of the operator required to see the working centre of the tool A by approximately 25°. Moreover, in the drawing, c indicates the centre of vision of an operator sitting on the longitudinal axis of the machine, as occurs in the case of a traditional agricultural tractor with central driving position. With respect to this solution, this invention allows to reduce the torsion angle required by the operator to see the working centre of tool A by approximately 45°.

## Claims

1. An agricultural tractor with a front section (12a) and a rear section (12b), comprising:
- a lifting arm (18) jointed to the chassis in the rear section (12b) around a transverse axis and extending in parallel along the longitudinal axis of the tractor (L) in a lowered configuration,
- a driving position (28) arranged laterally to the lifting arm (18) and including a driving seat (32) normally facing the front section (12a),
- an attachment unit (26) for farming tools arranged in said rear section (12b) in a position which is substantially central with respect to the longitudinal axis (L) of the tractor (10),
**characterised in that**: said seat (32) swivels on a vertical axis (R) towards said rear section (12b), the seat having a maximum swivelling angle of 20°.

2. A tractor according to claim 1, **characterised in that** the rotation axis (R) of the seat (32) is arranged on the outside of the seat (32).

3. A tractor according to claim 3 **characterised in that** said driving position (28) extends towards the opposite side of said lifting arm (18) with respect to an engine (30).

## Patentansprüche

1. Landwirtschaftlicher Schlepper mit einem Vorderteil (12a) und einem hinteren Teil (12b), aufweisend:
- einen Hebearm (18), verbunden mit dem Chassis in dem hinteren Teil (12b) um eine Querachse und sich parallel der Längsachse des Schleppers (L) in einer abgesenkten Anordnung erstreckend,
- eine Fahrposition (28), angeordnet lateral zu dem Hebearm (18) und einen Fahrersitz (32) beinhaltend, welcher gewöhnlich zum Vorderteil (12a) weist,
- eine Anschlusseinheit (26) für landwirtschaftliche Geräte, angeordnet an dem hinteren Teil (12b) in einer Position, welche im Wesentlichen mittig bezüglich der Längsachse (L) des Schleppers (10) ist,
**dadurch gekennzeichnet, dass** der Sitz (32) sich auf einer vertikalen Achse (R) zu dem hinteren Teil (12b) dreht, wobei der Sitz einen maximalen Drehwinkel von 20° aufweist.

2. Schlepper gemäß Anspruch 1, **dadurch gekennzeichnet, dass** die Drehachse (R) des Sitzes (32) an der Außenseite des Sitzes (32) angeordnet ist.

3. Schlepper gemäß Anspruch 3, **dadurch gekennzeichnet, dass** die Fahrposition (28) sich zu der gegenüberliegenden Seite des Hebearms (18) bezüglich eines Motors (30) erstreckt.

## Revendications

1. Tracteur agricole présentant une section avant (12a) et une section arrière (12b), lequel tracteur comprend :
- un bras de levage (18) raccordé au châssis dans la section arrière (12b) de façon à pivoter autour d'un axe transversal et s'étendant parallèlement à l'axe longitudinal du tracteur (L) dans une configuration abaissée,
- un poste de conduite (28) placé latéralement au bras de levage (18) et incluant un siège de conduite (32) normalement dirigé vers la section avant (12a),
- une unité de fixation (26) destinée à des outils agraires placés dans ladite section arrière (12b) dans une position qui est sensiblement centrale par rapport à l'axe longitudinal (L) du tracteur (10),
**caractérisé en ce que** ledit siège (32) pivote autour d'un axe vertical (R) en direction de ladite section arrière (12b), le siège présentant un angle de pivotement maximum de 20°.

2. Tracteur selon la revendication 1, **caractérisé en ce que** l'axe de rotation (R) du siège (32) est situé à l'extérieur du siège (32).

3. Tracteur selon la revendication 3, **caractérisé en ce que** ledit poste de conduite (28) s'étend du côté opposé dudit bras de levage (18) par rapport à un moteur (30).
